**Europäisches Patentamt**

**European Patent Office**

**Office européen des brevets**

(19)

(11) Veröffentlichungsnummer : **0 437 743 B1**

(12)

# EUROPÄISCHE PATENTSCHRIFT

(45) Veröffentlichungstag der Patentschrift :
**25.08.93 Patentblatt 93/34**

(51) Int. Cl.⁵ : **C09D 175/06**

(21) Anmeldenummer : **90124080.4**

(22) Anmeldetag : **13.12.90**

(54) **Verfahren zur Herstellung von lufttrocknenden, wässrigen Bindemittelemulsionen und deren Verwendung für die Formulierung von wässrigen Tauchlacken.**

(30) Priorität : **22.12.89 AT 2916/89**

(43) Veröffentlichungstag der Anmeldung :
**24.07.91 Patentblatt 91/30**

(45) Bekanntmachung des Hinweises auf die
Patenterteilung :
**25.08.93 Patentblatt 93/34**

(84) Benannte Vertragsstaaten :
**BE CH DE ES FR GB IT LI NL SE**

(56) Entgegenhaltungen :
**EP-A- 0 104 683**
**EP-A- 0 305 795**
**FR-A- 2 526 032**
**FR-A- 2 547 306**

(73) Patentinhaber : **Vianova Kunstharz**
**Aktiengesellschaft**
**Bundesstrasse 175**
**A-8402 Werndorf (AT)**

(72) Erfinder : **Zückert, Bertram, Dr.**
**Krottendorferstrasse 90**
**A-8052 Graz (AT)**
Erfinder : **Krassnitzer, Manfred**
**Sandgasse 47**
**A-8010 Graz (AT)**

## Beschreibung

Die Erfindung betrifft ein Verfahren zur Herstellung von lufttrocknenden, wäßrigen Bindemittelemulsionen auf Basis von Kondensationsprodukten aus speziellen Emulgatorharzen mit Urethanalkydharzen bzw. Urethanölen, welche sich besonders für die Formulierung von wäßrigen Tauchlacken eignen.

Es gibt eine Reihe von Schutzrechten, welche die Herstellung von wäßrigen Bindemittelemulsionen für lufttrocknende Lacke auf Basis von Urethanalkydharzen bzw. Urethanölen betreffen. So werden in der AT-PS 369.774 und in der AT-PS 377.777 Emulsionen beschrieben, bei denen acrylmodifizierte Alkydharze, welche eine Säurezahl von 25 - 70 mg KOH/g haben und einen Gehalt von 4 - 10 Gew.-% Acryl- oder Methacrylsäure, bzw. von 7 - 13 Gew.-% Polyethylenglykol aufweisen, als Emulgatorharz für die Urethankomponente verwendet werden. In der AT-PS 372.967 und in der AT-PS 377.776 werden Emulgatorkomponenten mit einer Säurezahl von 25 - 70 mg KOH/g eingesetzt, welche durch Pfropfcopolymerisation von Fettsäurepolyolestern mit 5 - 8 Gew.-% Acrylsäure oder Methacrylsäure, zusammen mit anderen Vinyl- und Acrylverbindungen, erhalten werden, und 7 - 13 Gew.-% Polyethylenglykol enthalten.

Nach beiden Verfahren lassen sich Emulsionen von Urethanalkydharzen bzw. Urethanölen mit guten anwendungstechnischen Eigenschaften herstellen. Sie haben sich in der Praxis bewährt, wobei die Produkte der AT-PS 369.774 vorwiegend für industrielle Grundierungen, jene der AT-PS 372.967 vor allem für Holzlasuren verwendet werden.

Diese Emulsionen haben jedoch einen gemeinsamen Nachteil. Es können daraus keine höher pigmentierten Lacke bzw. Grundierungen formuliert werden, welche durch Tauchen appliziert werden können. Tauchlacke auf Basis der genannten Produkte zeigen beim Betrieb industrieller Tauchbecken, bedingt durch die notwendige Badumwälzung bzw. durch das Ein- und Austauchen des Lackiergutes, auch in Gegenwart der üblichen Lackadditive keine ausreichende Entschäumung. Die auf dem Lackiergut verbleibenden Schaumbläschen führen zu Störungen an der Filmoberfläche. Überdies zeigen diese Produkte bei Schichtstärken ab ca. 20 μm (Trockenfilm) ein Einreißen des Naßfilms an senkrechten Flächen unter Bildung horizontaler Risse, entweder bereits beim Austauchen des Werkstückes aus dem Tauchbecken oder innerhalb der Antrocknungsphase. Beide Erscheinungen treten besonders bei Lacken auf, die nicht (Alkanol)amine, sondern Ammoniak als Neutralisationsmittel enthalten.

Aufgabe der vorliegenden Erfindung war es daher, ein Verfahren zu entwickeln, nach dem Emulsionen auf Basis von Urethanalkydharzen bzw. Urethanölen hergestellt werden können, welche sich zu gut entschäumbaren und rißsicheren Tauchlacken verarbeiten lassen, wobei diese Eigenschaften auch bei Verwendung von Ammoniak, anstelle der stark toxischen Amine, erhalten bleiben sollen. Selbstverständlich müssen die Emulsionen auch in den anderen wichtigen Eigenschaften, wie Stabilität, Trocknungsgeschwindigkeit und Korrosionsschutzwirkung der Filme den Anforderungen der Praxis entsprechen.

Überraschenderweise konnte diese Aufgabe dadurch gelöst werden, daß als Emulgatorkomponente mit mindestens 10 Gew.-% (Meth)acrylsäure - neben weiteren Comonomeren - modifizierte Oligoester von ungesättigten Fettsäuren eingesetzt werden, die eine ausschließlich aus der zur Modifizierung eingesetzten (Meth)acrylsäure resultierende Säurezahl von 70 bis 140 mg KOH/g aufweisen.

Die vorliegende Erfindung betrifft demgemäß ein Verfahren zur Herstellung von lufttrocknenden, wäßrigen Bindemittelemulsionen auf Basis von Kondensationsprodukten aus speziellen Emulgatorharzen mit Urethanalkydharzen oder Urethanölen, welches dadurch gekennzeichnet ist, daß man

(A) 25 bis 50 Gew.-% eines durch Pfropfcopolymerisation mit, bezogen auf die Komponente (A), 10 bis 24 Gew.-% (Meth)acrylsäure und 20 bis 40 Gew.-% (Meth)acrylatmonomeren und/oder Vinylmonomeren, die außer der Doppelbindung keine weitere funktionelle Gruppe aufweisen, modifizierten Oligoesters, welcher einen Gehalt von 35 bis 60 Gew.-% an trocknenden Fettsäuren, von 5 bis 8 Gew.-% an mehrwertigen Alkoholen, von gegebenenfalls bis zu 10 Gew.-% an cyclischen Monocarbonsäuren, von gegebenenfalls bis zu 10 Gew.-% an Polyethylenglykol, und eine ausschließlich aus der eingesetzten (Meth)acrylsäure resultierende Säurezahl von 70 bis 140 mg KOH/g und eine Grenzviskositätszahl, gemessen in Chloroform bei 20°C, von 7 bis 12 ml/g aufweist, mit

(B) 50 bis 75 Gew.-% eines Urethanalkydharzes und/oder Urethanöles, welche eine Säurezahl von weniger als 5 mg KOH/g, eine Aminzahl von 5 bis 20 mg KOH/g, eine OH-Zahl von 10 bis 80 mg KOH/g, und eine Grenzviskositätszahl, gemessen in Chloroform bei 20°C, von 8 bis 13 ml/g aufweisen, und aus

(a) 45 bis 70 Gew.-% trocknenden Fettsäuren
(b) 15 bis 25 Gew.-% mehrwertigen Alkoholen
(c) gegebenenfalls bis zu 10 Gew.-% cyclischen Monocarbonsäuren
(d) gegebenenfalls bis zu 16 Gew.-% Dicarbonsäuren
(e) 8 bis 30 Gew.-% Diisocyanaten und
(f) 0,8 bis 6 Gew.-% tertiären Alkylaminen, welche zusätzlich eine Hydroxylgruppe oder eine primäre oder sekundäre Aminogruppe tragen,

aufgebaut sind, wobei die Summen der Prozentzahlen für die Zusammensetzung der Komponenten (A) und (B) und für die Kombination aus (A) und (B) jeweils 100 betragen, bei 90 bis 130°C soweit kondensiert, bis die Grenzviskositätszahl, gemessen in Chloroform bei 20°C, im Vergleich zur Mischung der Komponenten (A) und (B) vor der Reaktion um 0,3 bis 3 ml/g gestiegen ist und ein nach Neutralisation einwandfrei mit Wasser verdünnbares Produkt mit einer Grenzviskositätszahl, gemessen in Chloroform bei 20°C, von 10 bis 15 ml/g vorliegt, welches nach Zusatz von maximal 20 Gew.-% an organischen Hilfslösemitteln und nach 50 bis 100%iger Neutralisation der Carboxylgruppen mit Basen, in Wasser emulgiert wird.

Die Erfindung betrifft weiters die Verwendung dieser Bindemittelemulsionen zur Formulierung von wäßrigen Tauchlacken.

Die als Komponente (A) eingesetzten modifizierten Fettsäure-Oligoester werden vorzugsweise in einem 2-stufigen Prozeß hergestellt. In der ersten Stufe wird aus 30 bis 50 Gew.-% trocknender Fettsäuren mit einer Jodzahl von mindestens 135 und vorwiegend isolierten Doppelbindungen, aus 15 bis 25 Gew.-% (Meth)acrylsäure und aus 30 bis 55 Gew.-% (Meth)acrylatmonomeren und/oder Vinylmonomeren, die außer der Doppelbindung keine reaktiven funktionellen Gruppen aufweisen, ein Fettsäurepfropfcopolymer hergestellt. Dieses wird in einer zweiten Reaktionsstufe, gegebenenfalls zusammen mit weiteren trocknenden Fettsäuren, mit den mehrwertigen Alkoholen, sowie mit den gegebenenfalls eingesetzten Rohstoffen, wie cyclische Monocarbonsäuren und Polyethylenglykol, verestert.

Für die Herstellung des Fettsäurepfropfcopolymeren sind besonders pflanzliche und tierische Fettsäuren mit einer Jodzahl von mindestens 135 (bevorzugt 160 - 200) mit vorwiegend isolierter Stellung der C-C-Doppelbindungen geeignet. Beispiele sind die Fettsäuren des Leinöles, Saffloröles, Hanföles, Perillaöles und, soweit sie die oben genannten Bedingungen erfüllen, spezielle Tallöl- und Fischölfettsäuren. Die isoliert ungesättigten Fettsäuren können mit bis zu 25 Gew.-% an dehydratisierter Rizinusfettsäure oder einer vergleichbaren, durch Isomerisierung hergestellten Conjuen-Fettsäure gemischt werden.

Für die erfindungsgemäß eingesetzte Komponente (A) werden vorzugsweise Methacrylsäure oder Mischungen aus Methacrylsäure und Acrylsäure verwendet, wobei der Anteil an Acrylsäure 25 Gew.-% nicht übersteigen soll. Als (Meth)acrylatmonomere bzw. Vinylmonomere, die außer der Doppelbindung keine weitere funktionelle Gruppe aufweisen, dienen insbesondere solche (Meth)acrylatmonomere und aromatische Vinylmonomere, die benzinlösliche Polymere mit einem Glasumwandlungspunkt (Tg) von 20 bis 60°C bilden. Geeignet sind unter anderem Ester der Methacrylsäure und Acrylsäure mit n-Butanol, Isobutanol, tert.-Butanol oder 2-Ethylhexanol. Zum Einstellen eines optimalen Tg-Bereiches des Copolymeren bzw. der daraus resultierenden Filmhärte kann Vinyltoluol verwendet werden. In kleinen Anteilen (bis zu 20 Gew.-%) können auch Monomere, welche benzinunlösliche Polymere bilden, wie Methylmethacrylat oder Styrol, mitverwendet werden.

Die Pfropfcopolymerisation wird so durchgeführt, daß die Hauptmenge der Fettsäure, gegebenenfalls in Gegenwart geringer Anteile inerter Lösemittel, auf 110 bis 150°C erhitzt wird und die Mischung der Monomeren mit einem geeigneten Initiator und der restlichen Fettsäure im Verlauf von einigen Stunden zudosiert wird. Die Reaktionsmischung wird anschließend so lange weiter auf Reaktionstemperatur gehalten, bis die Rückstandsbestimmung einen Polymerisationsumsatz über 95 % ergibt. Als Initiatoren kommen unter anderem Di-tert.-butylperoxid, tert.-Butyl-perbenzoat, Dibenzoylperoxid und Cumolhydroperoxid in Betracht.

In der zweiten Stufe können pflanzliche und tierische Fettsäuren mit einer Jodzahl ab 120 eingesetzt werden, wobei bevorzugt ein Teil der Doppelbindungen in konjugierter Stellung vorliegen soll. Geeignet sind unter anderem Soja-, Leinöl-, Saffloröl-, Tallöl- sowie Rizinenfettsäure. Zur Regulierung der Filmhärte können ferner bis zu 10 Gew.-% an cyclischen Monocarbonsäuren, wie Harzsäuren oder Benzoesäure, mitverwendet werden.

Als Polyole kommen für die Herstellung der Oligoester alle drei- bis sechswertigen Alkohole in Betracht, welche auch üblicherweise zur Herstellung von Alkydharzen eingesetzt werden. Bevorzugt werden Trimethylolethan, Trimethylolpropan, Pentaerythrit und Sorbit verwendet.

Zur Verbesserung der Emulgierwirkung kann auch ein Anteil bis zu 10 Gew.-% eines Polyethylenglykols mit einem Molgewicht von 1000 - 3000 eingebaut werden.

Bei der Veresterung werden bevorzugt die gegebenenfalls eingesetzten freien Fettsäuren mit den Polyalkoholen bei 220 - 260°C bis zu einer Säurezahl von 5 - 20 mg KOH/g vorverestert. Anschließend wird das Fettsäure(meth)acrylsäure-Copolymere zugesetzt und bei 160 - 190°C zu Ende verestert. Um die Bedingung zu erfüllen, daß die Säurezahl der Komponente A von 70 bis 140 mg KOH/g ausschließlich von Carboxylgruppen der (Meth)acrylsäure stammt, wird die Menge des Pfropfcopolymeren so bemessen, daß die Säurezahl 60 bis 100 % der Carboxylgruppen der eingesetzten (Meth)acrylsäure entspricht. Da diese Carboxylgruppen infolge sterischer Hinderung sehr langsam reagieren, kann angenommen werden, daß bei Erreichen der angestrebten Säurezahl die Säuregruppen der Fettsäuren bereits quantitativ verestert sind. Die Veresterung wird beendet, wenn die Grenzviskositätszahl, gemessen in Chloroform bei 20°C, zwischen 7 und 12 ml/g und die Säurezahl im oben genannten Bereich liegt. Die Komponente (A) weist zusammengefaßt folgende Zusammensetzung auf:

```
Fettsäuren, gesamt                35 - 60 Gew.-%
(Meth)acrylsäure                  10 - 24 Gew.-%
(Meth)acrylat- und/oder
Vinylmonomere ohne weitere
funktionelle Gruppen              20 - 40 Gew.-%
Polyole                            5 -  8 Gew.-%
Cyclische Monocarbonsäuren         0 - 10 Gew.-%
Polyethylenglykol                  0 - 10 Gew.-%
```

Die als Komponente (B) eingesetzten urethanisierten Alkydharze bzw. Urethanöle entsprechen im wesentlichen den in der AT-PS 372.967 beschriebenen Produkten und sind durch folgende Zusammensetzung und Kennzahlen charakterisiert:

| | |
|---|---|
| Fettsäuren | 45 - 70 Gew.-% |
| Polyole | 15 - 25 Gew.-% |
| Cyclische Monocarbonsäuren | 0 - 10 Gew.-% |
| Dicarbonsaüren | 0 - 16 Gew.-% |
| Diisocyanate | 8 - 30 Gew.-% |
| tertiäre Amine | 0,8 - 6 Gew.-% |

```
Säurezahl                         unter 5 mg KOH/g
Aminzahl                          5 - 20 mg KOH/g
Hydroxylzahl                     10 - 80 mg KOH/g
Grenzviskositätszahl              8 - 13 ml/g
(Chloroform, 20°C)
```

Als ungesättigte Fettsäuren sind für die Komponente (B) solche mit isolierten und konjugierten Doppelbindungen mit einer Jodzahl über 125 geeignet. Beispiele sind Soja-, Safflor-, Lein- oder Tallölfettsäure und die Fettsäuren des Holzöls. Die Fettsäuren können frei oder in Form ihrer Öle bzw. synthetisch hergestellten Polyolester eingesetzt werden. Die Auswahl der Polyalkohole, der aromatischen oder cycloaliphatischen Monocarbonsäuren und der Dicarbonsäuren ist nicht kritisch und kann vom Fachmann aufgrund der gewünschten Eigenschaften und Kennzahlen getroffen werden.

Als Diisocyanate kommen im Interesse der Trocknungsgeschwindigkeit und Filmhärte vor allem aromatische Diisocyanate, wie 4,4'-Diphenylmethandiisocyanat und Toluylendiisocyanat in Betracht. Bevorzugt wird die technische Mischung aus 80 Gew.-% 2,4- und 20 Gew.-% 2,6-Toluylendiisocyanat verwendet.

Zur Einführung der tertiären Aminogruppen werden Amine der allgemeinen Formel $Y-R_1-N(R_2)(R_3)$ eingesetzt, wobei Y für eine Hydroxyl- oder eine primäre oder sekundäre Aminogruppe steht, $R_1$ einen Alkylenrest mit 2 bis 5 C-Atomen und $R_2$ sowie $R_3$ einen Alkylrest mit 1 bis 4 C-Atomen bedeuten.

Bei der Herstellung der urethanmodifizierten Komponente (B) wird zuerst nach den üblichen Methoden ein niedermolekulares, hydroxylreiches Alkydharz bzw. ein Fettsäurepolyolpartialester mit einer Säurezahl unter 5 mg KOH/g hergestellt. Nach Zugabe eines inerten Lösemittels wird bei 40 bis 60°C das Diisocyanat zugesetzt und bei 60 bis 80°C reagiert, bis der Gehalt an freien NCO-Gruppen etwa auf die Hälfte des theoretischen Ausgangswertes gefallen ist. Anschließend wird das Amin, verdünnt mit etwas inertem Lösemittel, zugegeben und die Temperatur auf 90 bis 110°C gesteigert. Diese Temperatur wird gehalten bis der NCO-Gehalt auf unter 0,1 % gefallen und die geforderte Grenzviskositätszahl erreicht ist.

Die Komponenten (A) und (B) werden in dem gewünschten Verhältnis gemischt, auf 100 - 120°C erhitzt und die aus der Herstellung der Komponenten stammenden inerten Lösemittel unter Vakuum schonend entfernt. Anschließend wird so lange bei 90 - 130°C gehalten, bis die Grenzviskositätszahl einen Wert im Bereich von 10 - 15 ml/g (Chloroform, 20°C) erreicht hat, der um 0,5 bis 3 ml/g, vorzugsweise um 1 bis 2 ml/g, höher liegt, als der für eine Mischung der Komponenten vor der Reaktion gemessene Wert.

Die beanspruchten Bereiche für die Grenzviskositätszahl haben dabei eine mehrfache Bedeutung. Der Mindestwert von 10 ml/g muß erreicht werden, um eine ausreichend rasche Trocknung bzw. Verfilmung zu gewährleisten. Der Höchstwert von 15 ml/g darf nicht überschritten werden, weil sonst die Viskosität zu hoch wird und die Stabilität der Emulsion und der aus ihr hergestellten Lacke leidet.

Zur Erzielung einer optimalen Emulsionsstabilität ist auch die Cokondensation der Komponenten mit einer Zunahme der Grenzviskositätszahl um mindestens 0,5 Einheiten notwendig. Eine Erhöhung der Grenzviskositätszahl um mehr als 3 Einheiten führt jedoch zu Emulsionen mit zu starker Strukturviskosität und schlechter Entschäumbarkeit.

In einer besonderen Ausführungsform des erfindungsgemäßen Verfahrens kann die Komponente (B) auch in situ, d.h. in Gegenwart der Komponente (A), hergestellt werden. In diesem Fall wird das niedermolekulare Alkydharz-Vorprodukt bzw. der Fettsäurepartialester mit der Komponente (A), gegebenenfalls bei erhöhter Temperatur, gemischt, mit einem inerten Lösungsmittel, z.B. Toluol, verdünnt und mit dem Diisocyanat versetzt. Dann wird bei 50 - 70°C gehalten, bis der NCO-Gehalt etwa auf 50 % des Ausgangswertes gefallen ist. Anschließend wird das Amin zugegeben und die Reaktion bei 90 - 110°C zu Ende geführt. Der NCO-Wert soll unter 0,1 % und die Grenzviskositätszahl bei 8 - 13 ml/g (Chloroform, 20°C) liegen. Da die Komponente (A) nur wenig oder keine OH-Gruppen besitzt und die sterisch gehinderten Carboxylgruppen im Vergleich zu OH-Gruppen nur sehr langsam reagieren, entstehen dabei Urethanalkydharze bzw. Urethanöle, welche noch nicht ausreichend mit der Komponente (A) verknüpft sind. Es ist daher auch in diesem Fall erforderlich, in Gegenwart oder nach Entfernung des inerten Lösungsmittels, eine partielle Kondensation vorzunehmen, wobei ebenfalls eine Grenzviskositätszahl von 10 - 15 ml/g (Chloroform, 20°C) erreicht werden soll. Das Ausmaß der Veresterung, d.h. der Anstieg der Grenzviskositätszahl, soll jedoch unter Berücksichtigung vorausgehender geringfügiger Reaktionen zwischen den Komponenten bei der homogenen Vermischung bzw. bei der Isocyanatreaktion um 0,2 bis 1,0 Einheiten verringert werden.

Nach Abschluß der partiellen Veresterung wird das Produkt mit maximal 20 Gew.-% eines oder mehrerer organischer Hilfslösemittel verdünnt. Als Hilfslösemittel kommen vor allem ganz oder teilweise wasserlösliche Alkohole und Alkoxyalkohole in Betracht. Beispiele sind Isopropanol, n-Butanol, Butoxyethanol und Methoxypropanol. Es können aber auch andere wasserverträgliche Lösungsmittel, wie N-Methylpyrrolidon oder Diethylenglykoldimethylether, verwendet werden. Schließlich wird nach teilweiser oder vollständiger Neutralisation der freien Carboxylgruppen mit Ammoniak, organischen Aminen oder Alkalihydroxiden unter starkem Rühren das Wasser zugegeben. Es entstehen milchige bis opake Emulsionen mit leichter Strukturviskosität, welche sich ohne Probleme zu rasch trocknenden Grundierungen und Decklacken verarbeiten lassen. Die daraus hergestellten Lacke eignen sich besonders für die Tauchapplikation, da sie sich mit den für Wasserlacke üblichen Antischaummitteln leicht entschäumen lassen und beim Tauchen gleichmäßige und fehlerfreie Filme liefern. Dies gilt auch für Emulsionen, welche unter Verwendung von Ammoniak als Neutralisationsmittel hergestellt werden.

Die Formulierung, Herstellung und Verarbeitung derartiger Lacke sind dem Fachmann bekannt und in der einschlägigen Literatur beschrieben.

Die nachfolgenden Beispiele sollen die Erfindung erläutern. Alle Teil- und Prozentangaben beziehen sich auf Gewichtseinheiten, soferne nichts anderes angegeben ist. Die angegebenen Grenzviskositätszahlen wurden in Chloroform bei 20°C gemessen und sind in ml/g angegeben.

Herstellung der in den Beispielen verwendeten Komponenten und Vorprodukte

Komponente (A)

(a) Herstellung der Fettsäurepfropfcopolymerisate:
Die in der Tabelle 1 angegebenen Rohstoffe werden in folgender Weise umgesetzt:
Die Polymerisation wird in einer 90 %igen theoretischen Ansatzkonzentration in Xylol bei 135 bis 140°C durchgeführt. Zwei Drittel der zuvor unter Vakuum entwässerten Fettsäure werden mit der Hälfte des Xylols vorgelegt und auf die Reaktionstemperatur erwärmt. Dann werden in 6 bis 8 Stunden das Gemisch der Monomeren, sowie die Mischung aus der restlichen Fettsäure und dem übrigen Xylol, mit dem Peroxid-Initiator gleichmäßig zugegeben. Als Peroxid-Initiator dient ein Gemisch aus 3 Teilen tert.-Butylperbenzoat mit 1 Teil 50 %igem Dibenzoylperoxid, bezogen auf 100 Teile Endprodukt. Nach Beendigung der Zugabe der Mischungen wird solange bei 135 bis 140°C gehalten, bis eine Rückstandsbestimmung einen mindestens 95%igen Polymerisationsumsatz ergibt. Bei zu langsamem Reaktionsfortgang wird mit einem Teil tert.-Butyl-perbenzoat korrigiert. Festkörper ca. 86 - 88 Gew.-%.

### Tabelle 1

|  | COP 1 | COP 2 | COP 3 |
|---|---|---|---|
| Leinölfettsäure | 41 | 41 | 41 |
| Methacrylsäure | 21 | 17,5 | 18 |
| Acrylsäure | - | 3 | 6 |
| n-Butylmethacrylat | 23 | - | - |
| Isobutylmethacrylat | - | 32 | 24 |
| Vinyltoluol | 15 | 6,5 | 11 |

(b) Herstellung der Komponente (A)

Die Ausgangsstoffe und Endwerte sind in der Tab. 2 zusammengefaßt.

Bei (A1) bis (A3) werden Fettsäuren und Polyole (Tab. 2/Teil 1) in üblicher Weise bei 240°C bis zu einer Säurezahl von 5 bis 10 mg KOH/g verestert. Nach Zugabe der Fettsäurepfropfcopolymerisate (COP/Tab. 2/Teil 2) wird bei 180°C bis zum Erreichen der angegebenen Endwerte weiterverestert.

(A4) enthält keine zusätzlichen Fettsäuren; das Fettsäurepfropfcopolymerisat wird unmittelbar mit dem Polyol und dem Polyethylenglykol bei 160°C verestert.

Tabelle 2

| Komponente | (A1) | (A2) | (A3) | (A4) |
|---|---|---|---|---|
| **Teil 1** | | | | |
| Isom. Linolsäure (1) | 22 | 15,4 | 11 | - |
| Tallölfettsäure | - | - | 11 | - |
| Pentaerythrit | 6,1 | 6,1 | 6,1 | - |
| Trimethylolpropan | - | - | - | 5,3 |
| PEG 1500 (2) | 5 | 5 | 5 | 9,6 |
| **Teil 2** | | | | |
| COP 1 (3) | 70,3 | - | - | 87,4 |
| COP 2 (3) | - | 76,5 | - | - |
| COP 3 (3) | - | - | 70,3 | - |
| | 103,4 | 103,0 | 103,4 | 102,3 |
| - Reaktionswasser | - 3,4 | - 3,0 | - 3,4 | - 2,3 |
| | 100 | 100 | 100 | 100 |
| Säurezahl mg KOH/g | 73 | 95 | 116 | 119 |
| Grenzviskositätszahl (in Chloroform bei 20°C) | 9,7 | 9,2 | 9,4 | 7,9 |

(1) Isomerisierte technische Linolsäure mit einem Anteil von ca. 50 % konjugierter Linolsäure

(2) Polyethylenglykol Molgewicht 1500

(3) Gewichtsangaben bezogen auf 100%iges Copolymerisat

Komponente (B)

Komponente (B1): In einem geeigneten Reaktionsgefäß werden 377 Tle Tallölfettsäure mit 106 Tlen Glycerin, 47 Tlen Pentaerythrit und 100 Tlen Phthalsäureanhydrid bei 220°C bis zu einer Säurezahl unter 2 mg KOH/g verestert. 81 Tle dieses niedermolekularen Alkydharzes werden mit 48 Tlen Toluol verdünnt und auf 50°C erwärmt. Nach Zugabe von 17 Tlen Toluylendiisocyanat (TDI) wird auf 60°C erwärmt und bis zu einem NCO-Wert von ca. 4 % (entsprechend ca. 50 % des Ausgangswertes) reagiert. Dann wird eine Mischung von 1,5 Tlen Dimethylethanolamin und 16 Tlen Toluol zugegeben und bei 100°C bis zu einer Grenzviskositätszahl (GVZ) von 10,5 ml/g (in Chloroform bei 20°C) reagiert. Gegebenenfalls können zur Erreichung der GVZ kleine Anteile von TDI nachgegeben werden. Das Produkt weist einen Festkörpergehalt von 60 % und eine Aminzahl von 9 mg KOH/g auf.

Komponente (B2): In gleicher Weise wie bei (B1) wird ein Alkydharz aus 124 Tlen isomerisierter technischer Linolsäure (s.o. Tab. 2), 100 Tlen Sojafettsäure, 90 Tlen Trimethylolpropan, 25 Tlen Pentaerythrit und 60 Tlen Isophthalsäure hergestellt, von welchem 84,3 Tle mit 47 Tlen Toluol verdünnt werden und anschließend mit 14 Tlen TDI und 1,7 Tlen Dimethylethanolamin in 16 Teilen Toluol bis zu einer GVZ von 9,9 ml/g (in Chloroform bei 20°C) weiter umgesetzt werden. Das Produkt weist einen Festkörpergehalt von 60 % und eine Aminzahl von 10 mg KOH/g auf.

Komponente (B3): 1400 Tle Tallölfettsäure werden mit 536 Tlen Trimethylolpropan und 136 Tlen Pentaerythrit bei 250°C zu einem Partialester mit einer Säurezahl von weniger als 2 mg KOH/g umgesetzt, von welchem 70 Tle mit 28 Tlen TDI und 2 Tlen Dimethylethanolamin in der oben beschriebenen Weise in insgesamt 65 Teilen Toluol gelöst bis zu einer GVZ von 10,6 ml/g (in Chloroform bei 20°C) umgesetzt werden. Das Produkt weist einen Festkörpergehalt von 60 % und eine Aminzahl von 12,5 mg KOH/g auf.

Beispiele 1 bis 3: Entsprechend den in Tab. 3 angegebenen Mengenverhältnissen werden die Komponenten (A) und (B) gemischt und die Lösemittel bei steigender Temperatur unter Vakuum abgezogen, bis ein Festkörpergehalt von 92 ± 1 % erreicht ist. Die Temperatur von 100 bis 120°C wird anschließend solange gehalten, bis die angegebenen Werte für die GVZ und die Säurezahl erreicht sind. Nach Zugabe des Hilfslösemittels wird unter Vakuum das restliche Toluol bis zu einem Festkörpergehalt von 87 % abdestilliert. Bei 60°C wird der Ansatz durch Zugabe der Wasser-Ammoniak-Mischung in die wäßrige Emulsion überführt.

Tabelle 3

(Die Mengen der Komponenten beziehen sich auf Tle Fest-harz.)

| Beispiel | 1 | 2 | 3 |
|---|---|---|---|
| Komponente (A) | 40 (A1) | 35 (A3) | 30 (A4) |
| Komponente (B) | 60 (B1) | 65 (B2) | 70 (B3) |
| GVZ-Mischung, ml/g (in Chloroform bei 20°C) | 10,2 | 9,8 | 9,8 |
| GVZ - Reaktions-produkt, ml/g (in Chloroform bei 20°C) | 11,7 | 12,3 | 11,5 |
| Säurezahl ml KOH/g | 28 | 40 | 35 |
| BUGL (1) | 15 | 15 | 15 |
| Wasser, deionis. | 131,7 | 143,5 | 144,9 |
| Ammoniak, 25 % | 3,3 | 4,5 | 3,1 |
| Neutralisations-grad in % | 97 | 92 | 73 |
| Festkörpergehalt,% | 40 | 38 | 38 |
| pH-Wert | 9,3 | 9,2 | 8,7 |

(1) Ethylenglykolmonobutylether

Beispiele 4 bis 5: Diese Beispiele beschreiben die Herstellung der Komponente (B) in Gegenwart der Komponente (A), ("in-situ"-Verfahren).

Beispiel 4: 40 Tle der Komponente (A2) und 43 Tle des in der Komponente (B3) eingesetzten Tallölfettsäure-Trimethylolpropan-Partialesters werden auf 50°C erwärmt und mit einer Mischung aus 16 Tlen TDI und 37 Tlen Toluol versetzt. Anschließend wird bei 60°C reagiert, bis der NCO-Wert auf ca. 50 % des theoretischen Ausgangswertes gefallen ist. Nach Zusatz einer Mischung aus 1 Tl Dimethylethanolamin und 6 Tlen Toluol wird der Ansatz auf 100°C erwärmt und bis zum Erreichen einer GVZ von mindestens 11,2 ml/g (in Chloroform bei 20°C) reagiert. (Die GVZ erreicht in diesem Bereich einen praktisch gleichbleibenden Wert.) Die weitere Verarbeitung erfolgt wie bei den Beispielen 1 bis 3. Die entsprechenden Angaben sind in der Tab. 4 zusammengefaßt.

Beispiel 5: 40 Tle der Komponente (A1) und 51,4 Tle der Vorstufe der Komponente (B2) werden gemischt und 30 Minuten bei 100°C homogenisiert. Nach Kühlen auf 50°C wird eine Mischung aus 7,6 Tlen TDI und 37 Tlen Toluol zugesetzt und bis zu einem NCO-Wert von 50 % des theoretischen Ausgangswertes reagiert. Nach Zugabe einer Mischung von 1 Tl Dimethylethanolamin und 6 Tlen Toluol wird bis zu einer GVZ von 10,2 ml/g (in Chloroform bei 20°C) reagiert. Die weitere Verarbeitung erfolgt wie bei den Beispielen 1 bis 3. Die entsprechenden Angaben sind in der Tab. 4 zusammengefaßt.

Tabelle 4

| Beispiel | 4 | 5 |
|---|---|---|
| GVZ-Rekations-produkt, ml/g (in Chloroform bei 20°C) | 12,5 | 12,1 |
| Säurezahl ml KOH/g | 37 | 29 |
| BUGL | 15 | 15 |
| Wasser, deionis. | 144 | 145,6 |
| Ammoniak, 25 % | 4 | 2,4 |
| Neutralisations-grad in % | 89 | 68 |
| Festkörpergehalt, % | 38 | 38 |
| pH-Wert | 9,0 | 8,5 |

**Lacktechnische Prüfung der Bindemittel gemäß Beispiele 1 bis 5**

1. Herstellung der Prüflacke

Die Emulsionen gemäß Beispiel 1 bis 6 werden, bezogen auf 100 Tle des 100%igen Bindemittels, mit 50 Tlen Eisenoxidrot, 50 Tlen Zinkphosphat, 70 Tlen Bariumsulfat und 30 Tlen Talkum in üblicher Weise in einer Perlmühle vermahlen und mit 2 Tlen einer wasserverträglichen Sikkativlösung (enthaltend 5 % Co, berechnet als Metall), sowie mit je 1 Tl eines Antihautmittels, eines Antiabsetzmittels und eines silikonfreien Entschäumungsmittels versetzt. Die Zusatzmittel sind handelsübliche Produkte, wie sie für den Einsatz in wäßrigen Lacksystemen empfohlen werden. Der Ansatz wird durch Zugabe von Wasser und einer 25%igen Ammoniaklösung auf eine Tauch-Viskosität entsprechend einer Auslaufzeit nach DIN 53211/20°C von 80 ± 3 Sekunden und einem pH-Wert von 9,0 ± 0,1 eingestellt. Es resultieren Lacke mit einem Festkörpergehalt von 60 - 62 %.

## 2. Prüfung der Lagerstabilität

Die Lacke zeigen nach einer vierwöchigen Lagerung bei 40°C keine wesentlichen Veränderungen bezüglich ihres Aussehens, ihrer Verarbeitbarkeit und der Eigenschaften der Lackfilme.

## 3. Prüfung des Trocknungsverhaltens

In Trockenfilm-Schichtstärken von ca. 30 μm sind die Lacke aus den Emulsionen gemäß Beispiel 1 bis 5 sind nach 25 bis 40 Minuten klebfrei und nach 2 bis 4 Stunden durchgetrocknet; der aus der Emulsion 6 hergestellte Lack ist nach 1 Stunde klebfrei und nach 6 Stunden durchgetrocknet.

## 4. Entschäumung und Tauchverhalten

Die Lacke aus den erfindungsgemäß hergestellten Emulsionen gemäß Beispiel 1 bis 6 waren 24 Stunden nach der Herstellung einwandfrei verarbeitbar und ergaben bläschenfreie Filme. Auch bei wiederholten Tauchvorgängen zeigten sich keine Störungen durch Schaumbildung. Die Filme mit Trockenfilmschichtstärken von 30 bis 35 μm zeigten weder nach dem Austauchen noch in der Trocknungsphase eine Rißbildung oder andere Störungen des Films.

Zum Vergleich wurden in gleicher Weise, wie oben beschrieben, Lacke aus Emulsionen gemäß Beispiel 1 der AT-PS 369.774 bzw. der AT-PS 372.967 hergestellt. Die Lacke mit Tauch-Viskosität waren auch 3 Tage nach Herstellung noch stark verschäumt und ergaben erst nach 7 Tagen annähernd blasenfreie Filme unmittelbar nach dem Tauchvorgang. Die Naßfilme zeigten nach dem Austauchen und Antrocknen waagrechte Risse. Beim Austausch des Neutralisationsmittels, Triethylamin/Dimethylethanolamin gegen Ammoniak, in der Emulsion gemäß AT-PS 369.774 zeigten sich die negativen Eigenschaften im noch verstärkten Umfang. Der Lack war nach einer Woche noch stark verschäumt und ergab beim Tauchen völlig unbrauchbare Filme.

## 5. Prüfung des Korrosionsschutzes

Die Lacke wurden in einer Trockenfilmschichtstärke von 30 $\pm$ 2 μm durch Tauchen auf zinkphosphatiertes Stahlblech appliziert und nach Lagerung von 7 Tagen bei Raumtemperatur 120 Stunden im Salzsprühtest nach ASTM B117/73 geprüft. Alle Emulsionen ergaben befriedigende Ergebnisse und zeigten nur geringe Unterrostung am Kreuzschnitt und eine Ablösung von weniger als 2 mm.

## Patentansprüche

1. Verfahren zur Herstellung von lufttrocknenden, wäßrigen Bindemittelemulsionen auf Basis von Kondensationsprodukten aus speziellen Emulgatorharzen mit Urethanalkydharzen oder Urethanölen, dadurch gekennzeichnet, daß man

(A) 25 bis 50 Gew.-% eines durch Pfropfcopolymerisation mit, bezogen auf die Komponente (A), 10 bis 24 Gew.-% (Meth)acrylsäure und 20 bis 40 Gew.-% (Meth)acrylatmonomeren und/oder Vinylmonomeren, die außer der Doppelbindung keine weitere funktionelle Gruppe aufweisen, modifizierten Oligoesters, welcher einen Gehalt von 35 bis 60 Gew.-% an trocknenden Fettsäuren, von 5 bis 8 Gew.-% an mehrwertigen Alkoholen, von gegebenenfalls bis zu 10 Gew.-% an cyclischen Monocarbonsäuren, von gegebenenfalls bis zu 10 Gew.-% an Polyethylenglykol, und eine ausschließlich aus der eingesetzten (Meth)acrylsäure resultierende Säurezahl von 70 bis 140 mg KOH/g und eine Grenzviskositätszahl, gemessen in Chloroform bei 20°C, von 7 bis 12 ml/g aufweist, mit

(B) 50 bis 75 Gew.-% eines Urethanalkydharzes und/ oder Urethanöles, welche eine Säurezahl von weniger als 5 mg KOH/g, eine Aminzahl von 5 bis 20 mg KOH/g, eine OH-Zahl von 10 bis 80 mg KOH/g, und eine Grenzviskositätszahl, gemessen in Chloroform bei 20°C, von 8 bis 13 ml/g aufweisen und aus

(a) 45 bis 70 Gew.-% trocknenden Fettsäuren
(b) 15 bis 25 Gew.-% mehrwertigen Alkoholen
(c) gegebenenfalls bis zu 10 Gew.-% cyclischen Monocarbonsäuren
(d) gegebenenfalls bis zu 16 Gew.-% Dicarbonsäuren
(e) 8 bis 30 Gew.-% Diisocyanaten und
(f) 0,8 bis 6 Gew.-% tertiären Alkylaminen, welche zusätzlich eine Hydroxylgruppe oder eine primäre oder sekundäre Aminogruppe tragen,

aufgebaut sind, wobei die Summen der Prozentzahlen für die Zusammensetzung der Komponenten

**11**

(A) und (B) und für die Kombination aus (A) und (B) jeweils 100 betragen, bei 90 bis 130°C soweit kondensiert, bis die Grenzviskositätszahl, gemessen in Chloroform bei 20°C, im Vergleich zur Mischung der Komponenten (A) und (B) vor der Reaktion um 0,3 bis 3 ml/g gestiegen ist und ein nach Neutralisation einwandfrei mit Wasser verdünnbares Produkt mit einer Grenzviskositätszahl, gemessen in Chloroform bei 20°C, von 10 bis 15 ml/g vorliegt, welches nach Zusatz von maximal 20 Gew.-% an organischen Hilfslösemitteln und nach 50 bis 100%iger Neutralisation der Carboxylgruppen mit Basen, in Wasser emulgiert wird.

2. Verfahren nach Anspruch 1, dadurch gekennzeichnet, daß man die Kondensation der Komponenten (A) und (B) bis zu einem Anstieg der Grenzviskositätszahl, gemessen in Chloroform bei 20°C, um 0,5 bis 3 ml/g, vorzugsweise um 1 bis 2 ml/g, führt.

3. Verfahren nach Anspruch 1, dadurch gekennzeichnet, daß man die Urethanisierung der Komponente (B) in Gegenwart der Komponente (A) durchführt.

4. Verfahren nach Anspruch 3, dadurch gekennzeichnet, daß man die Kondensation der Komponenten bis zu einem Anstieg der Grenzviskositätszahl, gemessen in Chloroform bei 20°C, um 0,3 bis 2 ml/g führt.

5. Verfahren nach den Ansprüchen 1 bis 4, dadurch gekennzeichnet, daß man bei der Herstellung der Komponente (A) Methacrylsäure oder Mischungen von Methacrylsäure mit bis zu 25 Gew.-% Acrylsäure einsetzt.

6. Verfahren nach den Ansprüchen 1 bis 5, dadurch gekennzeichnet, daß man vor oder im Zuge der partiellen Kondensation der Komponenten (A) und (B) die bei der Herstellung der Komponenten eingesetzten Lösemittel durch Vakuumdestillation entfernt.

7. Verwendung der nach den Ansprüchen 1 bis 6 hergestellten lufttrocknenden, wäßrigen Bindemittelemulsionen zur Formulierung von wäßrigen Tauchlacken.

## Claims

1. Process for the preparation of air-drying, aqueous binder emulsions based on condensation products of specific emulsifier resins with urethane alkyd resins or urethane oils, characterised in that
(A) 25 to 50 % by weight of an oligo ester modified by graft copolymerisation with, based on the component (A), 10 to 24 % by weight of (meth)acrylic acid and 20 to 40 % by weight of (meth)acrylate monomers and/or vinyl monomers, which have no further functional group other than the double bond, which oligo ester contains from 35 to 60 % by weight of drying fatty acids, from 5 to 8 % by weight of polyhydric alcohols, up to 10 % by weight if required of cyclic monocarboxylic acids and up to 10 % by weight if required of polyethylene glycol, and has an acid value of 70 to 140 mg of KOH/g which results entirely from the (meth)acrylic acid employed and an intrinsic viscosity value, measured in chloroform at 20°C, of 7 to 12 ml/g, are condensed at 90 to 130°C with
(B) 50 to 75 % by weight of a urethane alkyd resin and/or urethane oil which have an acid value of less than 5 mg of KOH/g, an amine value of 5 to 20 mg of KOH/g, an OH value of 10 to 80 mg of KOH/g and an intrinsic viscosity value, measured in chloroform at 20°C, of 8 to 13 ml/g, and are composed of
(a) 45 to 70 % by weight of drying fatty acids,
(b) 15 to 25 % by weight of polyhydric alcohols,
(c) up to 10 % by weight if required of cyclic monocarboxylic acids,
(d) up to 16 % by weight if required of dicarboxylic acids,
(e) 8 to 30 % by weight of diisocyanates and
(f) 0.8 to 6 % by weight of tertiary alkylamines which additionally carry a hydroxyl group or a primary or secondary amino group,
the sums of the percentages for the composition of the components (A) and (B) and for the combination of (A) and (B) are in each case 100, the condensation being continued until the intrinsic viscosity value, measured in chloroform at 20°C, by comparison with the mixture of the components (A) and (B) prior to the reaction, has risen by 0.3 to 3 ml/g and a product is present which after neutralisation can be indefinitely diluted with water and has an intrinsic viscosity value, measured in chloroform at 20°C, of 10 to 15 ml/g, which product, after adding not more than 20 % by weight of organic auxiliary solvents and neutralising 50 to 100 % of the carboxyl groups with bases, is emulsified in water.

2. Process according to Claim 1, characterised in that the condensation of the components (A) and (B) is continued until the intrinsic viscosity value, measured in chloroform at 20°C, has risen by 0.5 to 3 ml/g, preferably by 1 to 2 ml/g.

3. Process according to Claim 1, characterised in that the urethanisation of the component (B) is carried out in the presence of the component (A).

4. Process according to Claim 3, characterised in that the condensation of the components is continued until the intrinsic viscosity value, measured in chloroform at 20°C, has risen by 0.3 to 2 ml/g.

5. Process according to Claims 1 to 4, characterised in that methacrylic acid or mixtures of methacrylic acid with up to 25 % by weight of acrylic acid is or are employed in preparing the component (A).

6. Process according to Claims 1 to 5, characterised in that, prior to or during the partial condensation of the components (A) and (B), the solvents employed in the preparation of the components are removed by vacuum distillation.

7. Use of the air-drying, aqueous binder emulsions prepared according to Claims 1 to 6 in the formulation of aqueous dipping varnishes.


**Revendications**

1. Procédé de préparation d'émulsions aqueuses de liants séchant à l'air à base de produits de condensation de résines émulsionnantes spéciales avec des résines alkyde uréthane ou des huiles d'uréthane, caractérisé en ce que l'on condense, à une température de 90 à 130°C,

(A) 25 à 50 % en masse d'un oligoester modifié par copolymérisation par greffage avec, par rapport au constituant (A), 10 à 24 % en masse d'acide (méth)acrylique et 20 à 40 % en masse de monomères de (méth)acrylate et/ou de monomères vinyliques qui n'ont pas d'autre groupe fonctionnel en plus de la double liaison, cet oligoester présentant une teneur de 35 à 60 % en masse d'acides gras desséchants, de 5 à 8 % en masse d'alcools polyhydriques, d'éventuellement jusqu'à 10 % en masse d'acides monocarboxyliques cycliques, d'éventuellement jusqu'à 10 % en masse de polyéthylèneglycol, et un indice d'acide, résultant exclusivement de l'acide (méth)acrylique introduit, de 70 à 140 mg de KOH/g et un indice de viscosité limite, mesuré dans le chloroforme à 20°C, de 7 à 12 ml/g, avec

(B) 50 à 75 % en masse d'une résine alkyde uréthane et/ou d'une huile d'uréthane qui présentent un indice d'acide inférieur à 5 mg de KOH/g, un indice d'amine de 5 à 20 mg de KOH/g, un indice d'OH de 10 à 80 mg de KOH/g et un indice de viscosité limite, mesuré dans le chloroforme à 20°C, de 8 à 13 ml/g, et qui sont formées à partir de

(a) 45 à 70 % en masse d'acides gras desséchants,
(b) 15 à 25 % en masse d'alcools polyhydriques,
(c) éventuellement jusqu'à 10 % en masse d'acides monocarboxyliques cycliques,
(d) éventuellement jusqu'à 16 % en masse d'acides dicarboxyliques,
(e) 8 à 30 % en masse de diisocyanates et
(f) 0,8 à 6 % en masse d'alkylamines tertiaires qui portent en plus un groupe hydroxyle ou un groupe amino primaire ou secondaire,

les sommes des données en pourcentage pour la composition des constituants (A) et (B) et pour la combinaison de (A) et de (B) étant à chaque fois égales à 100, jusqu'à ce que l'indice de viscosité limite, mesuré dans le chloroforme à 20°C, ait augmenté de 0,3 à 3 ml/g par rapport au mélange des constituants (A) et (B) avant la réaction, et que l'on obtienne après neutralisation un produit parfaitement diluable à l'eau ayant un indice de viscosité limite, mesuré dans le chloroforme à 20°C, de 10 à 15 ml/g, produit que l'on émulsionne dans l'eau après avoir ajouté au plus 20 % en masse de solvants auxiliaires organiques et après avoir neutralisé 50 à 100 % des groupes carboxyle avec des bases.

2. Procédé selon la revendication 1, caractérisé en ce que l'on effectue la condensation des constituants (A) et (B) jusqu'à une élévation de l'indice de viscosité limite, mesuré dans le chloroforme à 20°C, de 0,5 à 3 ml/g, de préférence de 1 à 2 ml/g.

3. Procédé selon la revendication 1, caractérisé en ce que l'on effectue l'uréthanisation du constituant (B) en présence du constituant (A).

4. Procédé selon la revendication 3, caractérisé en ce que l'on effectue la condensation des constituants jusqu'à une élévation de l'indice de viscosité limite, mesuré dans le chloroforme à 20°C, de 0,3 à 2 ml/g.

5. Procédé selon les revendications 1 à 4, caractérisé en ce que l'on utilise, lors de la préparation du constituant (A), de l'acide méthacrylique ou des mélanges d'acide méthacrylique avec jusqu'à 25 % en masse d'acide acrylique.

6. Procédé selon les revendications 1 à 5, caractérisé en ce que l'on élimine par distillation sous vide, avant ou au cours de la condensation partielle des constituants (A) et (B), les solvants utilisés lors de la préparation des constituants.

7. Utilisation des émulsions aqueuses de liants séchant à l'air préparées selon les revendications 1 à 6 pour la formulation de peintures au trempé aqueuses.